(19) Europäisches Patentamt
European Patent Office
Office européen des brevets

(11) **EP 2 357 610 B1**

(12) **EUROPEAN PATENT SPECIFICATION**

(45) Date of publication and mention
of the grant of the patent:
**12.09.2012 Bulletin 2012/37**

(51) Int Cl.:
*G06T 7/00* (2006.01)     *H04N 1/00* (2006.01)

(21) Application number: **09306324.6**

(22) Date of filing: **23.12.2009**

(54) **Image display system comprising a viewing conditions sensing device**

Bildanzeigesystem, das eine Vorrichtung zur Erfassung der Betrachtungsbedingungen umfasst

Système d'affichage d'image comportant un dispositif de détection des conditions d'affichage

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**17.08.2011 Bulletin 2011/33**

(73) Proprietor: **Thomson Licensing**
**92130 Issy-les-Moulineaux (FR)**

(72) Inventors:
• **Poree, Corinne**
**92443 Issy Les Moulineaux cedex (FR)**
• **Stauder, Jürgen**
**92443 Issy Les Moulineaux cedex (FR)**
• **Sirot, Joël**
**92443 Issy les Moulineaux cedex (FR)**

(74) Representative: **Ruellan-Lemonnier, Brigitte**
**Technicolor**
**1-5 rue Jeanne d'Arc**
**92130 Issy-les-Moulineaux (FR)**

(56) References cited:
**EP-A2- 1 349 387      EP-A2- 1 942 680**
**US-A- 5 406 305      US-A1- 2007 216 776**
**US-B1- 6 771 323**

• **JONG-MAN KIM ET AL: "Illuminant Adaptive Color Reproduction Based on Lightness Adaptation and Flare for Mobile Phone" IMAGE PROCESSING, 2006 IEEE INTERNATIONAL CONFERENCE ON, IEEE, PI, 1 October 2006 (2006-10-01), pages 1513-1516, XP031048936 ISBN: 978-1-4244-0480-3**

EP 2 357 610 B1

**Description**

The invention relates to the automatic adaptation of color data provided according to reference viewing conditions, notably using the CIECAM model.

In imaging applications such as capturing and/or creating images, processing images for specific deliveries as for TV set, computer screen or movie theaters, finally displaying or publishing images, viewing conditions are an important constraint.

On the side of reproduction of images, images are generally delivered under specific formats in order to be displayed by specific display devices and to be watched by human observers under specific viewing conditions. Viewing conditions include geometrical aspects such as viewing distance and viewing angle, but in the following we will mainly focus on photometric and colorimetric aspects. Specific viewing conditions are, for example, dark conditions for images that are delivered for movie theaters, or dim conditions for images that are delivered for TV or by specific paper printers. Specific display devices may be, for example, digital projectors or direct view displays as Liquid Crystal Display (LCD) or Plasma Display Panels (PDP). Such specific viewing conditions are considered as "reference viewing conditions" in comparison with the actual viewing conditions under which the images are actually observed, for instance, in Movie Theater or in the TV room. For instance, images that are provided to be displayed under dark "reference viewing conditions" by a projection display device on a projection screen and watched under large viewing angle may in fact be projected under dim viewing conditions in a living room on a home theater projection screen and watched under a small viewing angle. For instance, images that are provided to be displayed by a TV set under dim "reference viewing conditions" may be actually viewed in "average" conditions, for instance if the sun shines in the TV room. Such a discrepancy between the "reference viewing conditions" and the "actual viewing conditions" will have a strong impact on the appearance of the displayed colors of the displayed images for a human observer.

The same applies to the side of the capture or of the creation of images. The colors of a given scene to capture will have difference appearance according the viewing conditions of this scene.

In order to master the appearance of colors for human observers in imaging applications, possible approaches include colorimetric color reproduction and appearance-based color reproduction.

Colorimetric color reproduction is ensured by a classic color management approach. Hereby, the target display device, for example a projection display, a direct view display, or a printer, is characterized in its way to reproduce colors leading to a target display color characterization model consisting of a forward target display color transform and an reverse target display color transform. Often a reference display device is used to define the "wanted" color reproduction described by a reference display color characterization model consisting of a forward reference display color transform and a reverse reference display color transform. From both characterization models, a calibration color transform is established that transforms the colors of an image such that the colorimetry of the reproduced image is as desired. This calibration color transform can be for example the concatenation of the forward reference display color transform and of the reverse target display color transform. The colorimetry is usually defined in the XYZ visual device-independent color space of the CIE 1931.

If the actual target viewing conditions are not identical to the reference viewing conditions for which the image signal is created and delivered, for an observer, even colorimetrically correctly reproduced colors can have an appearance on an actual target display device that is different from the appearance of the colors using the same image signal but reproduced on the reference display device. The color of images has to be adapted in a different way than colorimetric reproduction. For correct adaptation of images to specific viewing conditions, a new calibration color transform has to be established according to the principle of appearance-based color reproduction based on color appearance phenomena of the human visual system (HVS). The Color Appearance Model CIECAM02 (standardized by the CIE in 2002) proposes tools for such adaption of the images.

By inputting the CIE1931 color coordinates XYZ of a color, and by entering the value of specific parameters defining the viewing conditions, CIECAM02 standard provides equations for calculating mathematical correlates for six technically-defined dimensions of the corresponding color appearance: brightness Q, lightness J, colorfulness M, chroma C, saturation S, and hue H.

Any image that is displayed on a target display screen by a target display device and that is observed by an observer at a usual observation distance from this screen has its equivalent viewed image formed on the retina of the eye of the human observer. If a "region of interest" of this image is, for instance, a colored object, when the observer gazes this object, it will be placed at the center of the retina that corresponds to the fovea with its 2° of visual field. The color of this colored object impacting the fovea makes a so-called stimulus. The remaining part of the displayed image around this object will then correspond to the macula, a larger central part of the retina having 10° of visual field. All other part of the visual field then corresponds to the surround of the displayed image.

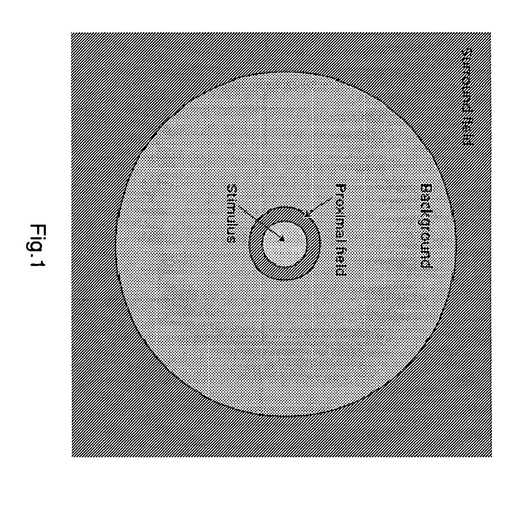

As illustrated on figure 1, CIECAM02 defines different zones of perception on the retina of the eye of a human observer: the stimulus at the center corresponding to the fovea, the proximal field around the center, the background around the proximal field, and the surround around the background. On figure 1:

- The inner circle is the stimulus, having an angular aperture of 2˚; an example for a color stimulus can be the color of a colored object gazed by the observer.
- The intermediate circle is the proximal field, extending out another 2˚; on the displayed image, it corresponds to the area in the vicinity of the colored object gazed by the observer.
- The outer circle is the background, reaching out to 10˚, from which a relative luminance ($Y_b$) need be measured (see below). If the proximal field is the same color as the background, the background is considered to be adjacent to the stimulus.

At a normal observation distance, the stimulus, the proximal field and the background all together correspond to the area of the entire target display screen, i.e. the so-called display field.

On figure 1, beyond the circles which comprise this display field is the surround field (or "peripheral area"), which corresponds for instance to the environment of a target display screen, i.e. including the walls, floor and ceiling of the room in which the display of images takes place, with all other objects in this room.

The totality of the proximal field, background, and surround field is called the adapting field, i.e. the field of view that supports vision adaptation and that extends to the limit of vision of the eye.

CIECAM02 defines three types of surround(ing)s-average, dim, dark-with associated surround parameters F, c, $N_c$ defined below in table 1.

Table 1

| Surround condition | F | c | $N_c$ | Application |
|---|---|---|---|---|
| Average | 1.0 | 0.69 | 1.0 | Viewing surface colors Day light vision (>10Cd/m$^2$) |
| Dim | 0.9 | 0.59 | 0.95 | Viewing television About 3 to 10 Cd/m$^2$ |
| Dark | 0.8 | 0.525 | 0.8 | Using a projector in a dark room (<3 Cd/m$^2$) |

where the three associated surround parameters are:

- F is a factor determining a degree of vison adaptation.
- c is the impact of surrounding.
- $N_c$ is a chromatic induction factor of the surround field.

CIECAM02 also defines the adopted white point $X_W$, $Y_W$, $Z_W$ to be the computational white point of the model. The adopted white point needs not to be identical with the adapted white point where the human eye adapts to, but often is. If the adopted white point is equal to the adapted white point, it is often chosen as the brightest part of the displayed image on the target display screen. By definition, $X_W$, $Y_W$, $Z_W$ are relative luminance values between 0 and 100, where 100 corresponds to the absolute luminance of the adopted white point, therefore $Y_W$=100.

CIECAM02 also defines the relative luminance of background $Y_b$. This is a relative luminance between 0 and 100 where 100 corresponds to the absolute luminance of the adopted white point. If the background is defined to be the video content around the gazed stimulus, $Y_b$ may be specified as a percent of the adopted white luminance target display white luminance. e.g. 20% (grey world assumption). Then, $Y_b$=$Y_W$/5. In principle, $Y_b$ would corresponds to the average luminance of the target display screen around the stimulus, i.e. around the observed color.

CIECAM02 also defines the absolute luminance of the adapting field $L_A$ (Cd/m$^2$), which is a quantity that will be needed later, and which should be measured with a photometer. If this measurement is not available, it can be calculated using the adopted white point according to the equation : $$L_A = L_w \frac{Y_b}{Y_W},$$

where $L_W$ is the absolute luminance of the adopted white in Cd/m$^2$, where $Y_b$ is the relative luminance of background, as defined above, and where $Y_w$ is the relative luminance of the adopted white, as defined above.

Finally, in the CIECAM02 standard, viewing conditions are defined by the set of the following viewing conditions parameters:

- the coordinates $X_w Y_w Z_w$ of the adopted white point as defined above;
- the absolute luminance of the adapting field $L_A$ (cd/m$^2$) as defined above;
- the relative luminance of background $Y_b$ as defined above, and
- the three surround parameters F, c, $N_c$, as defined above.

For the human eye, the appearance of a color stimulus defined in CIE1931 color coordinates XYZ is described by either:

- JCH coordinates, i.e. respectively, lightness J, chroma C, and hue h;
- QMS coordinates, i.e. respectively, brightness Q, colorfulness M, and saturation S.

The equations allowing the transformation XYZ -> JCh and XYZ-> QMS are part of the CIECAM02 standard, are not detailed in this document, and are well known in the art. This transformation depends on the viewing conditions as defined above, and the values of the different viewing conditions parameters defining these viewing conditions should be entered.

If a color is delivered to the target display device as a given $(RGB)_{VW\_ref}$ coordinate in the RGB color space of this target display device and is delivered for reference viewing conditions VW_ref, and if this color is to be displayed by this target display device under target viewing conditions VW_target, different from the reference viewing conditions VW_ref, the $(RGB)_{VW\_ref}$ coordinate should be transformed into another $(RGB)_{VW\_target}$ coordinate that is adapted to reproduce the same appearance as that would be obtained by displaying $(RGB)_{VW\_ref}$ under the VW_ref viewing conditions. Reference viewing conditions VW_ref and target viewing conditions VW_target are defined by a set of values of viewing conditions parameters as defined, for instance, in the CIECAM02 above.

Let us now define the following different calibration color transforms in order to calculate $(RGB)_{VW\_target}$:

- forward target display transform and reverse target display transform characterizing the target display device; such color transforms can be calculated in a manner known per se.
- forward reference display transform and reverse reference display transform characterizing the reference display device; such color transforms can be calculated or provided in a manner known per se.
- forward appearance transform under the VW_ref viewing conditions; such a color transform can be calculated by using the equations provided by the CIECAM02 standard and by entering the value of the viewing conditions parameters, as defined above, under the VW_ref viewing conditions;
- reverse appearance transform under the VW_target viewing conditions; such a color transform can be calculated by using again the equations provided by the CIECAM02 standard and by entering the value of the viewing conditions parameters, as defined above, corresponding to the VW_target viewing conditions.

Then $(RGB)_{VW\_target}$ coordinate can be obtained as follows:

- $(XYZ)_{VW\_ref}$ from $(RGB)_{VW\_ref}$ by forward target display transform, if it is assumed that $(RGB)_{VW\_ref}$ is given for the target display under reference viewing conditions VW-ref;
- (JCH) from $(XYZ)_{VW\_ref}$ by forward appearance transform still under reference viewing conditions VW-ref;
- $(XYZ)_{VW\_target}$ from (JCH) by reverse appearance transform under target viewing conditions VW_target;
- $(RGB)_{VW\_target}$ from $(XYZ)_{VW\_target}$ by reverse target display transform.

Such a masterization of the appearance of colors is well known in the art, as illustrated for instance in the documents EP1719989 (see page 7-8), US2008/012875 and US2008/0165292.

To implement practically in real time such a masterization of the appearance of colors for the display or the reproduction of images, the actual values of the parameters defining the actual target viewing conditions are needed. The determination of these values includes generally the following constraints: the use of sensing devices with photometers, colorimeters, or calibrated image sensing devices, their positioning for the control of their sensing field, calibrating display devices with a variety of color patches and "white" measurement. The measurement of the actual target viewing conditions usually needs skilled expertise in optics or physics. When using automatic systems with adapted sensing devices, geometrical notions of viewing conditions are difficult to capture. A large number of sensors is needed, and their positioning need skilled experts for correct installation.

In the document JP11232444, a solution for masterization of colors is proposed where the user of an image display device indicates one of a number of pre-defined lighting situations, i.e. viewing conditions, in order to establish the appropriate color transforms. Unfortunately, the procedure is not automatic and requires knowledge on the lighting situation. In US2008/0165292, an ambient light sensor allows to select automatically the pre-defined viewing conditions and the corresponding image display device profile for the display of images with color adaptation using the CIECAM standard. In the document US6453066, an automatic procedure is also proposed using an ambient light sensor to capture lighting conditions in the room where images are displayed. In the document US7164428, the light sensor is also used for color calibration of the image display device. In the documents US5406305 and US6771323 (col. 5-6 and col.9, lines 12-14), an automatic procedure is also proposed with an ambient light sensor to take into account the reflectance of the display screen. This reflectance is called « glare » and can be considered in the target characterization model. Unfortunately, none of the above-disclosed ambient light sensors is sensible to the CIECAM geometrical notions of background and surround for the evaluation of viewing conditions.

The documents EP1719989 and US2007/0216776 address the problem of implementing automatically the CIECAM02 standard, respectively on the display side and on the capture side of images. A drawback of the method proposed in these documents is that the background and the surround are totally separated : for instance, in EP1719989, the background is sensed by a first channel of "forward facing" sensors sensing light in a limited field of view (+/- 5 to 7˚) centered and directed on the target display screen, and the surround is sensed by a second channel of one "rearward facing" sensor sensing ambient light in a large field of view directed in the opposite direction. Moreover, in EP1719989, the CIECAM02 standard is not directly implemented, but only indirectly via a polynomial approximation.

An object of the invention is to avoid the aforementioned drawbacks.

For this purpose, the subject of the invention is an image display system comprising :

- a target image display screen defining a display field,
- an image delivering device able to deliver images defined by reference colors under reference viewing conditions,
- a target image display device able to display images on said target image display screen as provided by the image delivering device,
- a viewing conditions sensing device able to output target viewing conditions under which said image display device displays images, and
- a color appearance adaptation module adapted to transform reference colors of said images as delivered under said reference viewing conditions into target colors under said target viewing conditions, according to a color appearance model differentiating a display field of the images displayed on said target image display screen from a surround field surrounding the display field, wherein the viewing conditions sensing device comprises an image sensing device adapted to capture sensing images in a sensing field including said display field,

and wherein said viewing conditions sensing device further comprises identifying means adapted for identifying, within said sensing images, the contour of said display field.

Preferably, said identifying means is also adapted for identifying, within said sensing images, a brightest region within or without the contour of said display field.

Preferably, said viewing conditions sensing device further comprises means for analyzing, within sensing images :

- the average luminance Yb of colors within said identified contour,
- the color coordinates $X_w Y_w Z_w$ of the colors of said brightest region, and
- the average luminance of colors outside said identified contour.

Preferably, said viewing conditions sensing device further comprises means for calculating viewing conditions parameters as defined in the Color Appearance Model CIECAM02 from :

- the average luminance Yb of colors within said identified contour,
- the color coordinates $X_w Y_w Z_w$ of the colors of said brightest region, and
- the average luminance of colors outside said identified contour as provided by said means for analyzing.

An advantage of the invention is that the background and the surround are more connected each other and that the CIECAM model can be implemented more efficiently.

The invention will be more clearly understood on reading the description which follows, given by way of non-limiting example and with reference to the appended figures in which:

- Figure 1, already quoted, illustrates different zones of perception on the retina of the eye of a human observer, as used in the CIECAM02 visual perception model;
- Figure 2 shows a diagram of a main embodiment of the whole image display system with the viewing conditions sensing device according to the invention;
- Figure 3 shows a schematic lateral view of the main components of the image display system of figure 2;
- Figure 4 shows a diagram of the equipment that may be used for the preliminary step of calibration of the image sensing device of the viewing conditions sensing device of figures 2 and 3;
- Figure 5 illustrates the snapshot captured by the image sensing device of the viewing conditions sensing device of figures 2 and 3 in order to identify the contour of the display field;
- Figure 6 illustrates the contour of the display field as identified by the identifying means of the viewing conditions sensing device of figure 2.

It will be appreciated by those skilled in the art that the block diagrams presented herein represent conceptual views of illustrative circuitry embodying the invention. The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Other hardware, conventional and/or custom, may also be included.

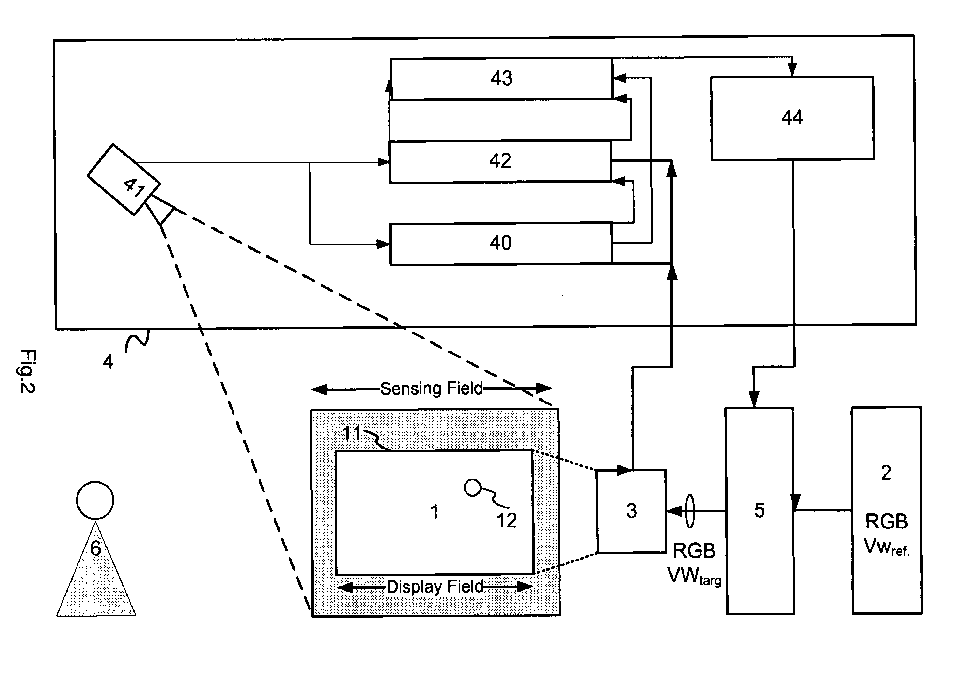

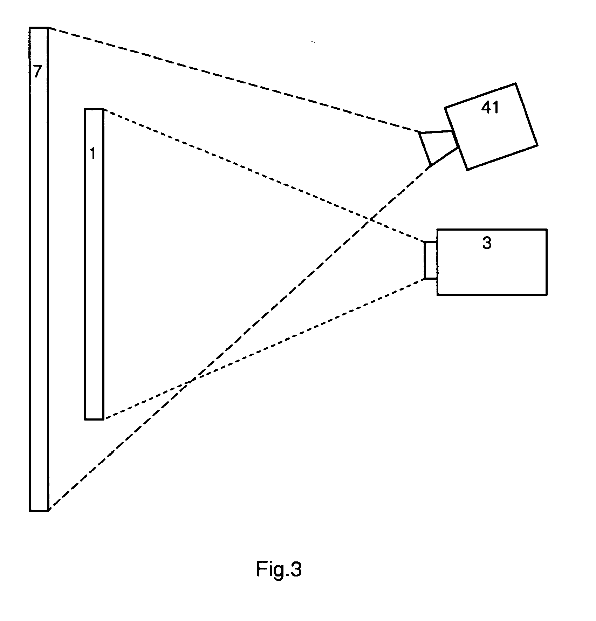

In reference to figures 2 and 3, the Image display system according to a main embodiment of the invention comprises :

- a target image display screen 1, which is a first lambertian projection screen, defining a display field ; placed behind this display screen 1, is positioned a larger lambertian surround screen 7 on which an "architectural" projector projects that represents the target viewing conditions ; without departing from the invention, this surround screen 7 may be replaced by any actual environment including walls, ceiling, furniture, with any objects that may be found around the target image display device ;
- an image delivering device 2, as a satellite video decoder or a DVD player, able to deliver images represented by reference color data $(RGB)_{VW\_ref}$ provided under reference viewing conditions VW_ref ;
- a target image display device 3 able to display images on the image display screen 1, said images being provided directly or indirectly through RGB color data by the image delivering device 2,
- a viewing conditions sensing device 4 able to output target viewing conditions VW_target under which the target image display device 3 displays images; this viewing conditions sensing device 4 comprises an image sensing device 41 which is adapted to capture sensing images in a sensing field including the display field and is positioned such that its sensing field encompass the whole display screen 1 and the surround screen 7;
- a color appearance adaptation module 5 adapted to transform reference color data representing said images under said reference viewing conditions VW_ref into target color data representing same images under said target viewing conditions VW_target, said transformation being performed according to the CIECAM02, as described above; such a color appearance model differentiates indeed a display field from a surround field surrounding the display field.

In reference to figure 2, the viewing conditions sensing device 41 comprises :

- the image sensing device 41, already quoted,
- initialization storage means 40, storing a sensing device color characterization model and a geometrical sensing device characterization model;
- means for identifying 42, within the sensing images, the contour 11 of the display field and a brightest region 12 within or outside this contour. A generic name for such means would be "geometrical analyzer";
- means for analyzing 43, within the sensing images :

  - > the average luminance Yb of colors within said identified contour, that mainly characterizes the background,
  - > the color coordinates $X_w Y_w Z_w$ of the colors of said identified brightest region, and
  - > the average luminance of colors outside said identified contour, that mainly characterizes the surround,
- means for calculating the viewing conditions parameters 44, notably from the data provided by the means for analyzing 43.

The different steps of use of this image display system will now be described.

It is assumed first that, in a preliminary step, the image sensing device 41 is calibrated in a manner known per that is adapted to provide a (R, G, B) -> (X, Y, Z) forward color transform characterizing this viewing condition sensing device 4, associating a matching (X, Y, Z) triplet to any possible (R, G, B) color outputted by this device 41.

In a preferred implementation, the position and field of the view of the image sensing device 41 is chosen as follows. First, some assumptions should be made:

- We assume that the depth of the display device is less or equal than its height h. This is generally true for flat display screens or projection screens.
- We assume that the objects in the room in the sensing field 7, beside, below and above the display screen have a depth comparable to this display screen.
- We assume that the observer is positioned at a standard distance of four times the height of the display screen.

In this preferred implementation we proceed as follows:

- The image sensing device 41 is positioned in the same plane as the observer, this plane being parallel to the screen 1.

- The field of view of the sensing device is set at 45 degrees, which corresponds approximately to cinema conditions.
- The image sensing 41 is positioned near the head of the observer at a distance less or equal to h. By this choice we ensure that the surface of part of the environment that is visible for the observer but not visible to the sensing device due to the parallax is not larger than 25%.

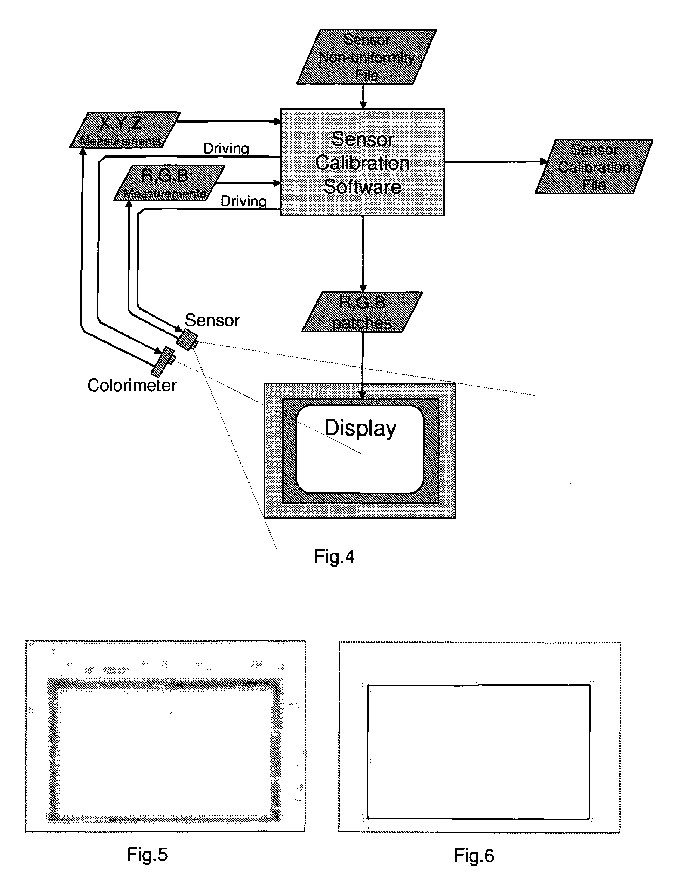

In reference to figure 4, for the purpose of preparation of the characterization of the image sensing device 41, a dark picture with a bright spot at the center is displayed on the display screen 1. The position and orientation of a colorimeter is adjusted getting the highest luminance measurement as possible. An image of the dark picture with the bright spot is taken with the sensing device, in order to be able later on to match the sensing device and colorimeter measurements. The image sensing device stays preferably at the same place during the entire preliminary step.

With the help of a Sensor Calibration Software, a test signal consisting of a set of images with different ($R_{ref}$, $G_{ref}$, $B_{ref}$) color patches is displayed on a display screen. For each ($R_{ref}$, $G_{ref}$, $B_{ref}$) color patch, a (X, Y, Z) color measurement is performed with a colorimeter, and a (R, G, B) measurement is performed with the image sensing device 41 to calibrate.

As the image sensing 41 delivers an image, the (R, G, B) data have to be extracted from the sensing image, and averaged within its corresponding part in the image.

At the end of the measurement process, a set of (R, G, B) triplets coming from these measurements, with a set of corresponding matching (X, Y, Z) triplets measured with the colorimeter is acquired. Using an interpolation scheme, the Sensor Calibration Software delivers a (R, G, B) -> (X, Y, Z) forward color transform, associating a matching (X, Y, Z) triplet to any possible (R, G, B) Sensor triplet. This transform is valid for those pixels of the image sensingd by the image sensing device 41 that are close to the position of the color patches. This color transform is the sensing device color characterization model.

In order to get the transformation for all the pixels of the image taken by the image sensing device 41, the non-uniformity of this image sensing device has to be characterized. For that purpose, an integrating sphere is used in order to create a uniform field to be observed by the image sensing device 41. Non uniformity of the image which is acquired using the integrating sphere comes only from the sensing device acquisition geometry and optics. This image sensingd by the image sensing device 41 is the geometric sensing device characterization model. The calibration of the sensing device can then be extended from a local calibration to a full field calibration, using the color characterization model as the reference, and using the geometric characterization model to perform a suitable correction for the rest of the image.

The obtained sensing device color characterization model and the obtained geometrical sensing device characterization model are stored in the initialization storage means 40.

After the preliminary step, four steps are carried out:

1st step : geometrical analysis of the sensing field :

First, the means for identifying 42 the contour 11 of the display field and a brightest region 12 inside or outside of this display field sends a test signal to the target display device 3 consisting of a white picture. A snapshot is taken by the image sensing device 41, showing the white picture displayed on the display screen 1 in a darker surround represented on the surround screen 7. During installation it has been ensured that the whole surface of the display screen 1 and at least an area all around this display screen on the surround screen is visible to the image sensing device 41. The snapshot is illustrated on figure 5.

Then, the means 42 identifies within this snapshot the contour 11 of the display field 1, in a manner known per se using image processing software, using for instance a calculation of the maximum density of black pixels. As illustrated on figure 6, four lines are then obtained, which correspond to the limits of the display screen. This picture gives a polygon. The position and size of the target display screen 1 is then known precisely such that, in any image sensingd by the image sensing device 41, it is possible to separate the pixels belonging to the display screen from the pixels out of the display screen 1.

These specific geometrical data that are obtained by the means 42 and that establish the position of the display screen inside the sensing field are sent to the analyzing means 43.

At this stage, when the image sensing device 41 captures a sensing image, the analyzing means 43 is able to calculate the average luminance Ys of all the pixels of the surround, i.e. outside the display screen 1 and the average luminance Yb of all pixels inside the display screen 1, i.e. concerning the background.

Still using the means 42, the image sensingd by the image sensing device 41 is searched for a brightest region 12 using known image processing methods, for example thresholding and morphological elimination of isolated pixels. Using the analyzing means 43, the color coordinates $R_w G_w B_w$ corresponding to the brightest regions 12 are then extracted from the image sensingd by the image sensing device 41 and transformed into the color coordinates $X_w Y_w Z_w$ of the adopted white point using the (R, G, B) -> (X, Y, Z) forward color transform characterizing the image sensing device 41.

2<u>nd</u> step : calculation of viewing conditions parameters :

From the average luminance Ys of the surround, the average luminance Yb of the display screen 1, i.e. of the background, and from the color coordinates $X_wY_wZ_w$ of the color of the identified brightest region as identified by the analyzing means 43 from any image sensingd by the image sensing device 41, the means of calculation 44 calculates, in a manner known per se, the viewing conditions parameters as defined in the Color Appearance Model CIECAM02, and representing the actual viewing conditions of an observer observing the image as it has been captured :

- the coordinates of the adopted white of the scene, i.e. the color coordinates $X_wY_wZ_w$ of the colors of the identified brightest region;
- the absolute luminance of the adapting field $L_A$ (cd/m$^2$) by averaging the values of luminance that are measured outside the display screen;
- the relative luminance of background $Y_b$ as the average luminance Yb of the display screen,
- the three surround parameters F, c, $N_c$ from the average luminance Ys of the surround and from table 1 above, as follows. First, one of four possible surround types is determined :

  ○ *Average* for day light vision (Ys>10Cd/m$^2$)
  ○ *Dim* for dim viewing conditions (3 < Ys < 10 Cd/m$^2$)
  ○ *Dark* for night viewing conditions (Ys<3 Cd/m$^2$)
  ○ *Intermediate* this is a linear combination between each of the three other states.

Secondly, having determined the surround type, table 1 is used to get the correspondent values of the three surround parameters F, c, $N_c$.

3<u>rd</u> step : color appearance adaptation :

The color appearance adaptation module 5 is adapted to transform any (RGB)$_{VW\_ref}$ color data provided by the image delivering device 2 under reference viewing conditions into (RGB)$_{VW\_target}$ color data for the target viewing conditions as represented by the viewing conditions parameters calculated by the means of calculation 44.

The color appearance adaptation module stores :

- a forward target display transform and a reverse target display transform characterizing the target display device;
- a forward appearance transform under the VW_ref viewing conditions.

Using the the viewing conditions parameters provided by the means of calculation 44 in the previous step, the color appearance adaptation module calculates a reverse appearance transform under the target viewing conditions, in a manner known per se using the equations provided by the CIECAM02 standard.

The color appearance adaptation module transforms the (RGB)$_{VW\_ref}$ color data provided by the image delivering device 2 into (RGB)$_{VW\_target}$ color data as follows:

- (XYZ)$_{VW\_ref}$ from (RGB)$_{VW\_ref}$ by forward target display transform, where (RGB)$_{VW\_ref}$ is given for the target display under reference viewing conditions VW-ref;
- (JCH) from (XYZ)$_{VW\_ref}$ by forward appearance transform under reference viewing conditions VW-ref;
- (XYZ)$_{VW\_target}$ from (JCH) by reverse appearance transform under target viewing conditions VW-target.

4th step : displaying images provided by the image delivering device 2 under target viewing conditions:

Images as provided by the image delivering device 2 and transformed by the color appearance adaptation module 5 are sent to the target image display device 3 that displays the transformed colors on the target display screen.

The observer watching the images on the target display screen under the target viewing conditions as evaluated by the viewing conditions sensing device 4 perceives the colors in the displayed image with the same appearance as an observer would have perceived the same images if they have been displayed under the reference viewing conditions. Thank to the image display system of the invention, the adaptation of the colors provided by the image delivering device is performed in real time according to the real and actual target viewing conditions and according to the CIECAM02 standard.

It is to be understood that the teachings of the present inention may be implemented in various forms of hardware, software, firmware, special purpose processors, or combinations thereof. The various processes and functions described herein may be either part of the microinstruction code or part of the application program, or any combination thereof, which may be executed by a CPU.

Although the illustrative main embodiment have been described herein with reference to the accompanying drawings, it is to be understood that the present invention is not limited to those precise embodiments, and that various changes and modifications may be effected therein by one of ordinary skill in the pertinent art without departing from the scope of the invention. All such changes and modifications are intended to be included within the scope of the the appended claims.

## Claims

1.  Image display system comprising :

    - a target image display screen (1) defining a display field,
    - an image delivering device (2) able to deliver images defined by reference colors under reference viewing conditions VW_ref,
    - a target image display device (3) able to display images on said target image display screen (1) as provided by the image delivering device (2),
    - a viewing conditions sensing device (4) able to output target viewing conditions VW_target under which said image display device (3) displays images, and
    - a color appearance adaptation module (5) adapted to transform reference colors of said images as delivered under said reference viewing conditions VW_ref into target colors under said target viewing conditions VW_target, according to a color appearance model differentiating a **display field** of the images displayed on said target image display screen from a **surround field** surrounding the display field,

    wherein the viewing conditions sensing device (4) comprises an image sensing device (41) adapted to capture sensing images in a **sensing field** including said **display field,**
    **characterized in that** said viewing conditions sensing device (4) further comprises identifying means (42) adapted for identifying (42), within said sensing images, the contour (11) of said **display field.**

2.  Image display system according to claim 1 **characterized in that** said identifying means (42) is also adapted for identifying, within said sensing images, a brightest region (12) within or out of the contour of said **display field.**

3.  Image display system according to claim 2 **characterized in that** said viewing conditions sensing device (4) further comprises means for analyzing (43), within sensing images :

    - the average luminance Yb of colors within said identified contour,
    - the color coordinates $X_W Y_W Z_W$ of the colors of said brightest region, and
    - the average luminance of colors outside said identified contour.

4.  Image display system according to claim 3 **characterized in that** said viewing conditions sensing device (4) further comprises means for calculating (45) viewing conditions parameters as defined in the Color Appearance Model CIECAM02 from :

    - the average luminance Yb of colors within said identified contour,
    - the color coordinates $X_W Y_W Z_W$ of the colors of said brightest region, and
    - the average luminance of colors outside said identified contour as provided by said means for analyzing (43).

## Patentansprüche

1.  Bildanzeigesystem, das umfasst:

    - einen Zielbildanzeigebildschirm (1), der ein Anzeigefeld definiert,
    - eine Bildliefervorrichtung (2), die durch Referenzfarben unter Referenzsichtbedingungen VW_ref definierte Bilder liefern kann,
    - eine Zielbildanzeigevorrichtung (3), die Bilder, wie sie durch die Bildliefervorrichtung (2) bereitgestellt werden, auf dem Zielbildanzeigebildschirm (1) anzeigen kann,
    - eine Sichtbedingungs-Abtastvorrichtung (4), die Zielsichtbedingungen VW_target, unter denen die Bildanzeigevorrichtung (3) Bilder anzeigt, ausgeben kann, und
- ein Farberscheinungs-Anpassungsmodul (5), das zum Umwandeln von Referenzfarben der Bilder, wie sie unter den Referenzsichtbedingungen VW_ref geliefert werden, in Zielfarben unter den Zielsichtbedingungen VW_target gemäß einem Farberscheinungsmodell, das ein Anzeigefeld der auf dem Zielbildanzeigebildschirm angezeigten Bilder von einem Umgebungsfeld, das das Anzeigefeld umgibt, unterscheidet, ausgelegt ist,

wobei die Sichtbedingungs-Abtastvorrichtung (4) eine Bildabtastvorrichtung (41), die zum Erfassen von Bildern in einem Abtastfeld, das das Anzeigefeld enthält, ausgelegt ist, umfasst,
**dadurch gekennzeichnet, dass** die Sichtbedingungs-Abtastvorrichtung (4) ferner ein Identifizierungsmittel (42) umfasst, das zum Identifizieren (42) des Umrisses (11) des Anzeigefelds innerhalb der Abtastbilder ausgelegt ist.

2. Bildanzeigesystem nach Anspruch 1, **dadurch gekennzeichnet, dass** das Identifizierungsmittel (42) ebenfalls zum Identifizieren eines hellsten Gebiets (12) innerhalb oder außerhalb des Umrisses des Anzeigefelds innerhalb der Abtastbilder ausgelegt ist.

3. Bildanzeigesystem nach Anspruch 2, **dadurch gekennzeichnet, dass** die Sichtbedingungs-Abtastvorrichtung (4) ferner ein Mittel umfasst, um innerhalb der Abtastbilder Folgendes zu analysieren (43):

- die durchschnittliche Farbdichte Yb von Farben innerhalb des identifizierten Umrisses,
- die Farbkoordinaten $X_wY_wZ_w$ der Farben des hellsten Gebiets, und
- die durchschnittliche Farbdichte von Farben außerhalb des identifizierten Umrisses.

4. Bildanzeigesystem nach Anspruch 3, **dadurch gekennzeichnet, dass** die Sichtbedingungs-Abtastvorrichtung (4) ferner ein Mittel umfasst, um Sichtbedingungsparameter, wie sie in dem Farberscheinungsmodell CIECAM02 definiert sind, zu berechnen (45) aus:

- der durchschnittlichen Farbdichte Yb von Farben innerhalb des identifizierten Umrisses,
- den Farbkoordinaten $X_WY_WZ_W$ der Farben des hellsten Gebiets, und
- der durchschnittlichen Farbdichte von Farben außerhalb des identifizierten Umrisses, wie sie durch das Mittel zum Analysieren (43) bereitgestellt wird.

## Revendications

1. Système d' affichage d'image comprenant :

- un écran d'affichage de l'image cible (1) définissant un champ d'affichage,
- un dispositif de fourniture d'image (2) capable de fournir des images définies par des couleurs de référence sous des conditions d'affichage de référence VW_ref,
- un dispositif d'affichage d'image cible (3) capable d'afficher des images sur ledit écran d'affichage d'image cible (1) telles que fournies par le dispositif de fourniture d'image (2),
- un dispositif de détection des conditions d'affichage (4) capable de détecter les conditions d'affichage cible VW_target sous lequelles ledit dispositif d'affichage d'image cible (3) affiche des images, et
- un module d'adaptation d'apparence de couleur (5) adapté pour transformer les couleurs de référence desdites images fournies sous lesdites conditions d'affichage de référence VW_ref en couleurs cibles sous lesdites conditions d'affichage cible VW_target, d'après un modèle d'apparence de couleur distinguant un champ d'affichage des images affichées sur ledit écran d'affichage d'image cible d'un champ environnant qui entoure le champ d'affichage,

dans lequel le dispositif de détection des conditions d'affichage (4) comprend un dispositif de détection d'image (41) adapté pour capturer des images de détection dans un champ de détection comprenant ledit champ d'affichage, **caractérisé en ce que** ledit dispositif de détection des conditions d'affichage (4) comprend en outre un moyen d'identification (42) adapté pour identifier (42), dans lesdites images de détection, le contour (11) dudit champ d'affichage.

2. Système d'affichage d'image selon la revendication 1 **caractérisé en ce que** ledit moyen d'identification (42) est également adapté pour l'identification, dans lesdites images de détection, une région plus lumineuse (12) à l'intérieur ou à l'extérieur du contour dudit champ d'affichage.

3. Système d'affichage d'image selon la revendication 2 **caractérisé en ce que** ledit dispositif de détection des conditions d'affichage (4) comprend en outre un moyen d'analyse (43), dans les images de détection des points suivants :

> - la luminance Yb moyenne des couleurs à l'intérieur dudit contour identifié,
> - les coordonnées de couleur $X_wY_wZ_w$ des couleurs desdites zones les plus lumineuses, et
> - la luminance moyenne des couleurs à l'extérieur dudit contour identifié,

4. Système d'affichage d'image selon la revendication 3 **caractérisé en ce que** ledit dispositif de détection des conditions d'affichage (4) comprend en outre un moyen pour calculer (45) les paramètres de conditions d'affichage comme définis dans le modèle d'apparence de couleur CIECAM02 de :

> - la luminance Yb moyenne des couleurs à l'intérieur dudit contour identifié,
> - les coordonnées de couleur $X_wY_wZ_w$ des couleurs de ladite zone la plus lumineuse, et
> - la luminance moyenne des couleurs à l'extérieur dudit contour identifié comme fournies par ledit moyen d'analyse (43).

Fig.1

Fig.2

Fig.3

Fig.4

Fig.5

Fig.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1719989 A
- US 2008012875 A
- US 20080165292 A
- JP 11232444 B
- US 6453066 B
- US 7164428 B
- US 5406305 A
- US 6771323 B
- US 20070216776 A